(19) Europäisches Patentamt
European Patent Office
Office européen des brevets

(11) Publication number: **0 125 907**
**B1**

(12) **EUROPEAN PATENT SPECIFICATION**

(45) Date of publication of patent specification: **07.01.88**

(51) Int. Cl.$^4$: **C 10 G 73/06,** C 10 G 73/32

(21) Application number: **84303214.5**

(22) Date of filing: **11.05.84**

(54) **Separation of dewaxing solvent from dewaxed oil in a lube oil dewaxing process using asymmetric polyimide membranes.**

(30) Priority: **13.05.83 US 494281**

(43) Date of publication of application:
**21.11.84 Bulletin 84/47**

(45) Publication of the grant of the patent:
**07.01.88 Bulletin 88/01**

(84) Designated Contracting States:
**DE FR GB IT**

(56) References cited:
**US-A-3 556 991**

**J. Membrane Science, vol. 11, 1982, pp. 297-309**

(73) Proprietor: **Exxon Research and Engineering Company**
**P.O.Box 390 180 Park Avenue**
**Florham Park New Jersey 07932 (US)**

(72) Inventor: **Wight, William Wallace**
**5425 Ridgeview Drive**
**Alta Loma, CA 91701 (US)**

(74) Representative: **Somers, Harold Arnold et al**
**ESSO Engineering (Europe) Ltd. Patents & Licences Apex Tower High Street**
**New Malden Surrey KT3 4DJ (GB)**

**EP 0 125 907 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for separating hydrocarbons from a solution comprising hydrocarbons and a solvent by selective permeation through a membrane, characterized in that the solution is a solvent and oil stream separated from a wax-oil dewaxing solvent slurry and in that at least part of the separation of solvent and oil is achieved by reverse osmosis through a selective permeable asymmetric polyimide membrane under reverse osmosis conditions, the asymmetric membrane being made from an aromatic, fully imidized polyimide whereof the dense side is contacted by the solvent and oil stream.

Preferably, solvent recovered by permeation by means of the asymmetric polyimide membrane is recycled to a waxy hydrocarbon oil dewaxing process from which the said solvent and oil stream is obtained. Solvent may be recovered from the retentate by stripping or distillation and may be recycled to the waxy hydrocarbon oil dewaxing process.

US—A—3,556,991 describes a method for the solvent extraction of aromatic hydrocarbons from a mixture of hydrocarbons (e.g. a reformate obtained by catalytic reforming of naphtha) which contains more than 25% aromatic hydrocarbons. According to this method, the mixture is contacted with a selective solvent (preferably sulfolane) which preferably contains a small proportion of water. An extract phase containing the solvent and aromatic hydrocarbons is recovered and passed to a membrane separation zone comprising at least two cells separated by a membrane which is of sufficient strength to withstand a differential pressure of from 1 to 500 psi (6.895 to 3,447.5 kPa). The membrane is selected from films of cellulose esters and other cellulose derivatives which may or may not be chemically modified. Other suitable membranes which may be employed are films of copolymers of vinyl and vinylidene chlorides, ethylene-propylene copolymers, polytetrafluoroethylene, butadiene-styrene copolymers, and various natural and synthetic rubbers. Aromatic hydrocarbons selectively permeate through the membrane together with small quantities of solvent, and the two latter are separated by distillation or stripping.

According to the process of the invention, a dewaxing solvent/oil mixture is contacted with the dense side of an asymmetric fully imidized polyimide membrane under reverse osmosis conditions, i.e. under a pressure at least sufficient to overcome the osmotic pressure of the solution. The dewaxing solvent selectively permeates through the membrane while the bulk of the oil is rejected by the membrane. In this manner an effective and energy-efficient partial separation of the dewaxing solvent from the oil is made. This dewaxing solvent recovered by permeation through the membrane is of sufficiently high purity to be returned to the dewaxing process with no additional treatment. The retentate from the membrane is passed to conventional upgrading means, such as distillation, wherein the dewaxing solvent remaining with the oil following the membrane separation is removed. Since a substantial volume of dewaxing solvent will have been removed from the solvent/oil stream by use of the asymmetric polyimide membrane the retentate stream has a much reduced concentration of dewaxing solvent (residual solvent) and less energy will be consumed in the form e.g., of distillation or solvent stripping to remove that residual solvent to yield pure oil. Utilization of the polyimide membrane separation process of the present invention will allow a significant increase in the thru-put of the dewaxer system. Asymmetric polyimide membranes are capable of functioning as low cost modules inserted into the processing flow stream either supplementing the conventional hardware already in place in old constructions (thereby increasing thruput or debottlenecking a given unit), or in new plants supplementing conventional hardware (thereby reducing the amount of conventional hardware installed).

The asymmetric polyimide membranes used in the process of the present invention are polyimide membranes made from an aromatic, fully imidized polyimide, characterized as being semipermeable and of the reverse osmosis type. US—A—4,307,135 assigned to MSI describes one such membrane having the ability to remove NaCl from a NaCl-water solution, such NaCl rejection being in the 95 to 99+% range. US—A—4,307,135 discloses that another potential use of such asymmetric polyimide membranes is for the purification of organic solvents.

Figure 1 describes a fabric supported asymmetric polyimide membrane.

Figure 2 describes a specific dewaxing operation employing solvent recovery using asymmetric polyimide membrane.

The structure of the asymmetric reverse osmosis polyimide membrane is shown in Figure 1 for a specific embodiment. It consists of a support fabric (3) onto which is formed the membrane (4). The support fabric represented as a woven cloth support may be, in practice, any readily permeable material (one which does not hinder or interfere with the flow of the permeate) and which is compatible with the solvent and the oil system, i.e., does not dissolve under the conditions of use. Therefore, in addition to the woven cloth support represented, one may also use similar materials which merely serve as a backing and support for the asymmetric reverse osmosis polyimide membrane, e.g., metal mesh, sintered metal, porous ceramic, sintered glass, paper, porous nondissolving plastic, etc. In practice it is preferred that the support backing material be a woven or non woven cloth, representative fiber materials being nylon, polyester, polypropylene, polyethylene or high wet strength paper.

The reverse osmosis polyimide membrane is described as being asymmetric, that is, the membrane is not uniform throughout its cross-section. It consists of a thin, dense layer (active layer) (1) formed atop a porous layer (2). This asymmetric membrane is supported on a backing material. The thinner the active

layer the lower the pressure drop across it and thus the higher is the solvent flux through the membrane. The overall membrane thickness (active layer and porous layer) ranges from about 1 to 10 mils (2.54 × $10^{-5}$m to 25.4 × $10^{-5}$m, preferably about 2 to 4 mils (5.08 × $10^{-5}$m to 10.16 × $10^{-5}$m). The membrane may be made into supported or free-standing flat sheets, supported or free-standing tubes, or hollow fibers etc.

The membranes for the separation of dewaxing solvent from mixtures of dewaxing solvent and dewaxed oil which are utilized in the present process are fabricated from fully imidized polyimide polymers.

The reverse osmosis polyimide membranes can be prepared from a prepolymer solution (e.g. polyamic acid or polyamic acid ester in a solvent), spreading the solvent/polymer solution to form a film and then chemically or thermally imidizing the film to form a membrane.. See e.g. US—A—3,546,175, US—A—3,179,632, US—A—3,179,633 and US—A—3,925,211. Alternatively, if the imidized polymer is soluble it can be dissolved in the solvent to form an appropriate casting dope and the membrane cast therefrom.

Typical solvents are N,N'-dimethylsulfoxide (DMSO), N,N'-dimethylacetamide (DMAC), hexamethylphosphoramide (HMPA), pyridine, tetramethylurea (TMU), N-methylpyrrolidone (NMP), N-methyl-2-piperidone, m-cresol, dimethylformamide (DMF) such solvents further being miscible with the membrane immersion or gelation liquid, such immersion/gelation liquid being water, alcohols, dioxane, ketones; preferably, for safety, being water and alcohols;

A commercially available polyimide useful for the production of membranes is manufactured and marketed by the Upjohn Company as type 2080 and is sold under that designation in powder form, or under the designation 2080D or 2080DHV in solution form, DMF being the solvent. This material is a highly polar aromatic, fully imidized copolymer derived from the co-condensation of benzophenone-3,-3', 4,4'-tetracarboxylic acid dianhydride (BTDA) and a mixture of di(4-aminophenyl) methane and toluene diamine (or the corresponding diisocyanates, 4,4'-methylenebis(-phenylisocyanate)) and toluene diisocyanate, (MDI and TDI respectively) as described in U.S. Patent No. 3,708,458. The obtained copolyimide has imide linkages which may be represented by the formula:

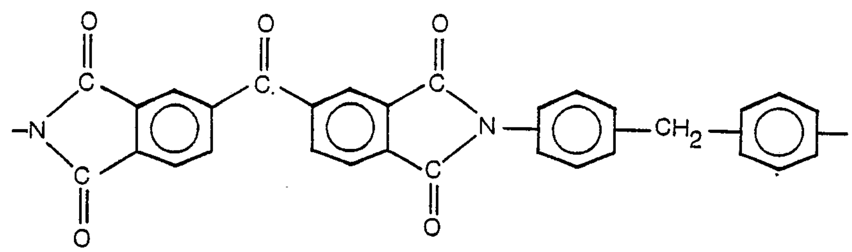 I

AND

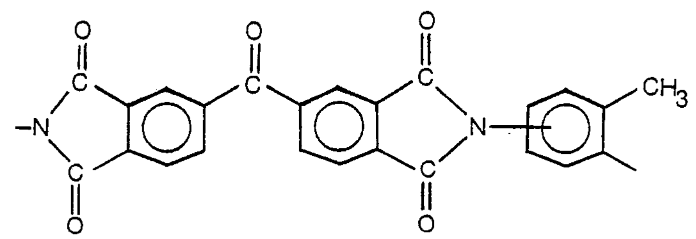 II

wherein the copolymer comprises from about 10 to 90% I and 90 to 10% II, preferably about 20% I and about 80% II (i.e. 2080). The ratio of polar to nonpolar groups in the respective formula is 3:3 and 3:5. Membranes can be cast from this polymer using the procedure outlined by MSI in US—A—4,307,135.

In general the polyimide polymer which can be used to produce membranes which may be useful in the present invention can be represented by the formula

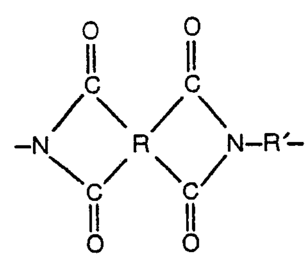

wherein R is a tetravalent radical and R' is a divalent radical, and is an aromatic, fully imidized polymer. Representative polyimide polymers and membrane or film casting techniques which should be useful in preparing membranes suitable for use in the present invention can be found in US—A—4,113,628;

US—A—3,179,623; US—A—3,816,303; US—A—3,546,175; US—A—3,925,211; US—A—3,179,633, it being understood that in employing any of the polyimide polymers described, care is exercised by the practitioner in the selection of R and R' and/or in the cross-linking of the polymer to insure that the resulting polyimide polymer membrane is resistant to pressurized ketone.

Further, the poly(amide)imides of US—A—3,816,303 are contemplated as also being of possible use in the present invention, care again being taken to insure that the polymer membrane is resistant to pressurized ketone.

Polyimide polymers such as those polymers produced by Ciba-Geigy and sold under the designation of XU—218 when formed into a membrane have demonstrated some ketone-oil separation capacity but have also been found to be subject to plastic deformation over time in the ketone solvent-dewaxed oil system. Plastic deformation is deemed to indicate that such membranes are unsuitable for use in the present invention. However, such polymers could be subjected to chemical or thermal cross linking and such treatment might possibly render such membranes suitable for use in the present ketone-oil separation process, provided the resulting membrane is not too fragile or too brittle for handling or for exposure to the pressures necessary to practice reverse osmosis. Membranes prepared from the polyimide polymer of USP 4,358,378 having the formula

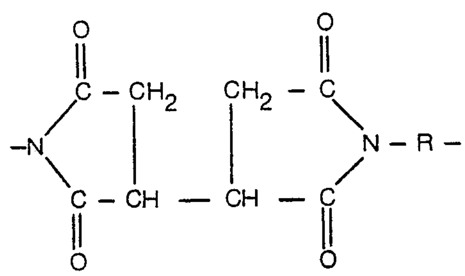

wherein R is a divalent group may also be used provided the membranes so prepared are not of the large pore ultrafiltration variety described in the patent, but are of the reverse osmosis type.

Polyimide membranes can be used immediately as such after preparation. However, they can also be treated with organic solvent to facilitate drying, (if necessary), storage, fabricating into elements and handling. It is well known that polyimides are inherently unstable towards hydrolysis (see Polymer Letters Vol. 13, pg. 701—709, 1975) so organic solvent exchange should be practiced to replace aqueous gelation solvent and to prevent membrane deterioration over extended periods of storage, see for example GB—A—2,073,654, GB—A—2,051,664, EP—A—0,023,406 or Final Report by Membrane Systems Inc. to Office of Water Research & Technology Development of Chlorine Resistant Membrane, Asymmetric Polyimide Membrane and Porous Substrate, Sudak et al. under contract No. 14—34—0001—9515, Sept. 1980, pp 153—234, pg. 209. Any gelation water can be replaced using any water miscible solvent such as low molecular weight alcohols or ketones, or mixtures thereof and mixtures of alcohols or ketones with glycols or glycerols, e.g. isopropyl alcohol/glycerol; polyethylene glycol, triethylene glycol, MEK, MIBK, MEK/MIBK etc. The glycol or glycerol exchanged membrane can then be air dried.

Reverse osmosis polyimide membrane useable in the present invention will be able to prevent the passage of a majority of oil molecules having a molecular weight as low as about 300 to 400, and larger. A polyimide membrane will be considered as being of the ultrafiltration type and not a reverse osmosis membrane, for the purposes of the present invention when the membrane no longer retains the bulk of the smallest molecular weight members of the dewaxed oil from the dewaxed oil/ketone solvent mixture being separated as used hereinafter in the specification and the claims. The terms polyimide and polyimide membrane are understood to include all of the above recited polyimide materials, unless a specific polyimide is expressly identified.

The polyimide membrane in the form of units or elements can be placed into contact with a dewaxed oil/dewaxing solvent mixture directly, with no conditioning or pretreatment required. This is a distinct operating advantage as compared with the use of a regenerated cellulose membrane as described in EP—A—13,834 wherein a pretreatment procedure involving the conditioning of the regenerated cellulose membrane with high pressure alcohol (methanol) followed by high pressure ketone (methyl ethyl ketone) is required.

The separation process of the instant invention employing the supported asymmetric polyimide membrane material is conducted by contacting the solvent/oil mixture with the dense side of the asymmetric membrane at a temperature of from about −50 to +150°C, preferably about −30 to +100°C, most preferably −20 to about +70°C.

The operating pressure must be greater than the osmotic pressure plus any back-pressure in the system. A net driving (gauge) pressure of from about 100 to 1500 psig (689.5 to 10342.5 kPa) preferably about 200 to 600 psig (1379 to 4137 kPa), most preferably about 300 to 500 psig (2068.5 to 3447.5 kPa) may be typically employed.

Any solvent dewaxing process may be employed in the operation of this invention, e.g. indirect heat

exchange using, for example, scraped-surface chillers.

Other well-known solvent dewaxing processes involve conventional, incremental solvent addition. In this method, solvent is added to the oil at several points along a chilling apparatus. The waxy oil is first chilled with solvent until some wax crystallization has occurred and the mixture has thickened considerably. A first increment of solvent is introduced at this point in order to maintain fluidity, cooling continues and more wax is precipitated. A second increment of solvent is added to maintain fluidity. This process is repeated until the desired oil-wax filtration temperature is reached, at which point an additional amount of solvent is added in order to reduce the viscosity of the mixture to that desired for the filtration step. In this method the temperature of the incrementally added solvent should also be about the same as that of the wax/oil/solvent mixture at the point of introduction. If the solvent is introduced at a lower temperature, shock chilling of the slurry occurs resulting in the formation of small and/or acicular shaped wax crystals with attendant poor filter rate.

Still another well-known process is the DILCHILL® process wherein a waxy oil is introduced into an elongated, staged cooling zone or tower at a temperature above its cloud point and incrementally introducing a cold dewaxing solvent into said zone, along a plurality of points or stages therein, while maintaining a high degree of agitation so as to effect substantially instantaneous mixing of the solvent and wax/oil mixture as they progress through said zone. The basic concept is shown in U.S. Patent No. 3,773,650.

Common solvents useful for dewaxing waxy petroleum oils may be used in the process of this invention. Representative examples of such solvents are (a) the aliphatic ketones having from 3 to 6 carbon atoms, such as acetone, methyl ethyl ketone (MEK) and methyl isobutyl ketone (MIBK), mixtures of the aforesaid ketones with aromatics ($C_6$—$C_9$ aromatics) such as benzene, xylene and toluene. In addition, halogenated, low molecular weight hydrocarbons such as the $C_1$—$C_4$ chlorinated hydrocarbons, e.g., dichloromethane, dichloroethane, and mixtures thereof, may be used as solvents either alone or in admixture with any of the aforementioned solvents. Further ethers, such as methyl tertiarybutyl ether can also be used alone or in combination with other solvents such as MTBE/toluene. Preferred solvents are MEK/MIBK and MEK/toluene.

In the dewaxing of any waxy hydrocarbon oil stock, preferably waxy petroleum oil stock or distillate fraction thereof, more preferably waxy lube oil, transformer oil or fuel oil stocks, the dewaxed oil and the dewaxing solvent may be separated using the process of this invention.

In the practice of the separation of dewaxing solvent containing ketone from dewaxed oil the membrane can be employed in the form of bundles of hollow fibers as described in US—A—3,228,877 or stacks of flat sheets suitably arranged or in the form of a spirally wound membrane element as described in, for example, US—A—3,417,870, US—A—3,173,867, US—A—3,367,594, US—A—3,386,583, US—A—3,397,790.

In fabricating such spiral wound elements various adhesives, spacers, backings, seals, etc. are employed. For use in a ketone solvent-dewaxed oil separation process the spiral wound element will typically comprise layers of polyimide membrane wound around a central tube (metal or solvent resistant plastic) containing holes for the permeate, the membrane layers being separated by alternate layers of a permeate carrier such as knitted Simplex (Dacron, with melamine formaldehyde stiffener) and a feed spacer made of Vexar (a polypropylene mesh). Membrane layers are sealed using an epoxy adhesive to sandwich the permeate cloth into a closed envelope in fluid communication with the perforated central tube leaving the perforations in the central tube as the only permeate outlet. The epoxy adhesive will generally comprise a ketone resistant resin formulation such as one comprising (1) Epon 828 which is a reaction product of bisphenol-A and epichlorohydrin (2) Cabosil M5, (3) Versamid 140 (a polyamide curing agent) (4) Estane 5707 F—1 (a polyurethane from B. F. Goodrich) and (5) DMF solvent wherein the components 1/2/3/4/5 are present in typical relationship based on parts by weight of about 100/10/60/4/12, which cures at about 25°C over about a 21 day period. This adhesive system is described and claimed in copending US Patent Application USSN 494,409 (now US—A—4,464,494. The layers of membrane, permeate carrier and feed spacer are wound around the central tube in a fashion consistent with preparing a spiral wound element. After the element is cured, the ends of the element are trimmed; a nylon seal carrier and a nylon anti-telescoping device are then added. The element is then covered on the outside with an epoxy reinforced fiber glass outer wrap. Elements of any size can be prepared but typical elements are about 8 inches (20.32 cm) in diameter and about 40 inches (101.6 cm) long and have ~225 square feet (~209,025 cm²) of membrane area and can be used at feed flow rates of about 30—50 gallons (113.55 to 189.25 liters) per minute at a 5—15 psi (34.48 to 103.42 kPa) pressure drop.

## DESCRIPTION OF A SPECIFIC EMBODIMENT

Figure 2 describes a specific embodiment of the process of the present invention.

Waxy hydrocarbon oil is fed via line (1) into a series of chiller units (2). Dewaxing solvent from storage (3) is fed via lines (4) into the chiller train. As the waxy hydrocarbon oil/solvent mixture progresses through the chiller train it forms a slurry comprising crystals of wax and a mixture of dewaxed oil and dewaxing solvent. This slurry is passed from the chiller train via line (5) to the filter (6). In practice, the chiller train may be a series of scraped surface chillers, or, preferably, a DILCHILL unit as described in US—A—3,773,650

®Registered service mark of Exxon Research and Engineering Company.

using cold dewaxing solvents or a combination of DILCHILL chilling and scraped surface chillers, as described in US—A—3,775,288, hereby incorporated by reference. Filter (6) effects the separation of the wax from the slurry thereby forming a wax cake, and a filtrate comprising a mixture of dewaxed oil and dewaxing solvent. The wax is removed from filter (6) via line (7) and sent to further processing. The filtrate is passed via line (8) to at least one membrane unit (9) wherein it contacts, under pressure, the dense side of an asymmetric polyimide membrane at a differential pressure across the membrane ranging from about 100 to 1500 psi (689.5 to 10342.5 kPa). A substantial portion of the dewaxing solvent preferentially permeates through the asymmetric polyimide membrane to form a solvent rich permeate, recovered via line (10) and sent to solvent storage (3) for recycle and an oil rich retentate, recovered via line (11) and sent to separation tower (12) wherein residual solvent is removed from the oil either by means of distillation or stripping. The recovered residual solvent is sent via line (10A) to solvent storage (3) for recycle while the solvent free dewaxed oil is recovered via line (13).

While membrane unit (9) shows only one unit, it is to be understood that in practice a multiplicity of units may be used, in parallel and/or in series, and that each unit will contain a multiplicity of membrane elements in series. It is to be understood that the membrane unit may be a spiral wound unit or element, a tubular unit or element, a hollow fiber unit or element, or a plate and frame unit or element. It is also to be understood that in the above representation, pumps, valves and assorted hardware have been omitted for the sake of simplicity, their placement in practice being within the scope of those skilled in the art.

## EXPERIMENTAL

Samples of polyimide membrane were evaluated in a high pressure, round membrane test cell. The membranes were cut into 3.0 inch (7.62 cm) diameter circles and placed in a test cell having a 2.6 inch (6.60 cm) opening. The membrane samples are sealed to the high pressure side of the cell by the use of a teflon O-ring. The membrane samples are supported on a sintered stainless steel disk. The test cells are connected into a recirculating loop wherein mixture of dewaxed oil/dewaxing solvent or pure solvent are contacted with the skin side of the membrane to be tested. Within the test cell the mixture is passed over the surface of the membrane at a rate of about 22.3 $cm^3$/sec, a rate great enough to prevent or minimize any concentration polarization effect. All membrane samples were tested under the following conditions unless otherwise indicated: pressure was 400 psig (2758 kPa gauge), temperature was 25°C, in a feed mixture consisting of 30 wt.% dewaxed oil (150 N) 35 wt.% MEK and 35 wt.% MIBK. (MEK/MIBK 1:1). All solvent permeation rates are expressed in liters per square meter of membrane are 24 hour day ($1/m^2$-d).

### Example 1

Samples of polyimide membranes were secured from Membrane Systems Inc. (MSI) and treated in accordance with the procedure, and gave the test results presented in Table 1. Except where otherwise indicated, the membranes were tested for the separation of ketone dewaxing solvent (1:1 MEK/MIBK) from dewaxed oil and also compared with membranes of regenerated cellulose (R.C.). The R.C. membranes (and, when indicated, some of the polyimide membranes) were preconditioned to pass ketone by the procedure of EP—A—13,834 (the R.C. membranes were first water washed then successively permeated with methanol and MEK at 400 psig (2758 kPa gauge) at room temperature) but, in the case of polyimide membrane such pretreatment is not necessary. The polyimide membrane samples secured from MSI are believed to have been prepared using Upjohn 2080 polyimide polymer by the technique described in US—A—4,307,135, which method is taught as yielding membranes reportedly possessing good salt rejection and water permeability. The details of the exact procedure employed to produce each membrane sample tested below is not known. It is to be noted that in a few instances (see samples 3—6, 26, 31) the results were obtained on a system which employed only MEK as solvent. Runs 32—37 demonstrate that membranes (26—31) which showed rather high flux rates on an oil single solvent system (MEK) showed a dramatic reduction in flux rate when tested on the oil-mixed solvent system (MEK/MIBK). The data does clearly demonstrate that polyimide membranes do separate dewaxing solvent containing ketone from dewaxed oil with good selectivity.

TABLE 1

| Sample | Pretreatment Procedure | Solvent Permeation Rate (1/m²-d) | Oil Rejection (%) (A) |
|---|---|---|---|
| 1[B,C] | air dry | 77 | 99.33 |
| 2[B,C] | air dry | 90 | 98.33 |
| 3[C*,D] | Solvent Exchange 50:50 $H_2O$:IPA (30 min) then 50:50 acetone:IPA (30 min) Then Dried (~10 min) | 633 | 98.0 |
| 4[C*D] | " | 776 | 85.0 |
| 5[C*D] | " | 1000 | 90.0 |
| 6[C*D] | " | 971 | 97.5 |
| 7[C] | air dried (18 hr) | 48.4 ± 7.2 | 95.2 ± 3.9 |
| 8[C] | wet/dried in situ | 358.6 ± 53.8 | 98.8 ± 0.7 |
| 9[1,C] | 5% glycerol in water/air dry | 197.2 ± 16.1 | 94.6 ± 4.5 |
| 10[1,C] | 10% glycerol in water/air dry | 278 ± 28.7 | 99.6 ± 0.1 |
| 11[1,C] | 15% glycerol in water/air dry (43 hr.) | 276.1 ± 30.5 | 99.6 ± 0.06 |
| 12[1,C] | 20% glycerol in water/air dry (43 hr.) | 439.3 ± 28.7 | 98.8 ± 0.7 |
| 13[1,C] | 25% glycerol in water/air dry | 426.7 ± 66.3 | 99.5 ± 0.1 |
| 14[1,C] | 30% glycerol in water/air dry | 396.2 ± 30.5 | 99.5 ± 0.1 |
| 11[C] | 15% glycerol in water/43 hr dry | 276.1 ± 30.5 | 99.6 ± 0.06 |
| 15[C] | 15% glycerol in water/140 hr dry | 380.1 ± 35.9 | 99.0 ± 0.6 |
| 12[C] | 20% glycerol in water/43 hr dry | 439.3 ± 28.7 | 98.8 ± 0.7 |
| 16[C] | 20% glycerol in water/140 hr dry | 392.7 ± 84.3 | 98.6 ± 0.7 |
| 17 | Permeation at 400 psi (2758 kPa): Methanol — MEK | 273 ± 26.7 | 95.7 ± 2.1 |
| 18 | MEK | 547 ± 103 | 93 ± 4.1 |
| 19 | No pretreatment | 471 ± 28.5 | 93 ± 3 |
| 20 | Membranes dried from 15% glycerol in methanol — stored 5 days then permeated at - | | |
| 21 | 400 psi (2758 kPa) — Methanol then MEK | 184 ± 7 | 98.7 ± 0.5 |
| | permeated at 400 psi (2758 kPa) MEK | 326 ± 21.4 | 94.9 ± 3.5 |
| 22 | no pretreatment | 225 ± 5.3 | 94 ± 3 |
| 23[C] | Regenerated cellulose | 571 | 70 |
| 24[C] | PM 100 R.C. (10 µm thick) used wet | 867.8 ± 52 | 49 ± 9 |
| 25[C] | PM 250 R.C. (17.5 µm) used wet | 435.7 ± 34.1 | 64.6 ± 2.0 |

TABLE 1 Continued

| Sample | Pretreatment Procedure | Solvent Permeation Rate ($1/m^2$-d) | Oil Rejection (%) (A) |
|---|---|---|---|
| 26[E,F] | 25% formamide in MeOH (15 min) air dry (15 min) | 986 | 97.17 |
| 27[E,F] | " | 520 | 77.50 |
| 28[E,F] | " | 520 | 91.47 |
| 29[E,F] | " | 484 | 95.04 |
| 30[E,F] | " | 487 | 95.04 |
| 31[E,F] | " | 843 | 98.97 |
| 32[F,G] | Membrane 26 after 150N/MEK (above) | 407 | 93.2 |
| 33[F,G] | Membrane 27 after 150N/MEK (above) | 274 | 68.0 |
| 34[F,G] | Membrane 28 after 150N/MEK (above) | 305 | 87.1 |
| 35[F,G] | Membrane 29 after 150N/MEK (above) | 233 | 90.5 |
| 36[F,G] | Membrane 30 after 150N/MEK (above) | 264 | 84.4 |
| 37[F,G] | Membrane 31 after 150N/MEK (above) | 389 | 98.6 |

A. $\text{Oil rejection} = \dfrac{\text{Feed Oil Conc.} - \text{Permeate Oil Conc}}{\text{Feed Oil Conc.}} \times 100\%$

B. Membrane cannot be air dried without a permanent loss of solvent flux.

C. Membrane was pressure permeated sequentially by methanol then MEK at 400 psi (2758 kPa), ambient temperature before being tested for ketone/oil separation.

C* Samples 3—6 were pressure permeated sequentially by methanol then MEK at 400 psi (2758 kPa) for about 20 minutes each, ambient temperature before being tested for ketone/oil separation.

D. Permeation test conducted on 20% 150N in MEK at 400 psi (2758 kPa), ambient temperature.

E. Permeation test conducted on 30% 150N in MEK at 400 psi (2758 kPa), ambient temperature.

F. Membranes stored in water prior to use, had a rotten egg odor indicating possible membrane deterioration.

G. Permeation test conducted on 30% 150N in MEK/MIBK 1:1 at 400 psi (2758 kPa), ambient temperature.

1. All dried membranes were air dried at least 18 hrs after being immersed for 15 minutes in the aqueous glycerol solutions.

## Example 2

Ciba Geigy XU—218 polyimide a polymer based on 5(6)-amino-1-(4'-aminophenyl)-1,3,3-trimethylindane was evaluated as a membrane for the ketone/oil separation process. A 20 wt.% solution of XU 218 in a 4:1 ratio solvent of dioxane/DMF was hand cast using a doctor blade with an 11 mil ($27.94 \times 10^{-5}$m) gap and an 8 sec. solvent evaporation time. The membrane was gelled in tap water. The membrane is initially insoluble in MEK, MIBK and acetone. The membrane was determined to be insoluble in an unpressurized hot mixture of 30 wt% 150N oil in 1:1 MEK/MIBK. A test run was conducted using the ketone oil solution at 400 psig (2758 kPa gauge) at ambient temperatures. Three test circles were evaluated which gave an average permeate flux of 1238 ± 187 $1/m^2$-d and an oil rejection of 71.5 ± 6%. The test circles were examined after use and were found to have wrinkled. This membrane is plasticized by exposure to the feed and deforms under pressure and as presently constituted is thus unsuitable for use in the present system.

## Example 3

General Electric Ultem 1000 polyetherimide polymer was also treated to determine its suitability for use in this separation. It is believed the polymer has the probable structure:

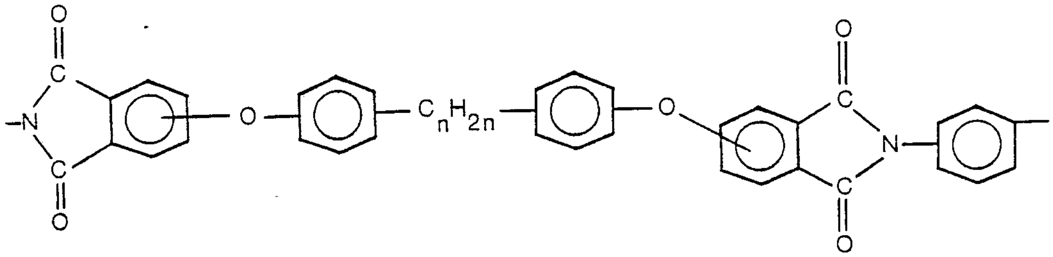

see USP 4,156,547 and 4,073,773.

A series of casting solutions was prepared. Nineteen wt.% polymer was mixed into solutions of 0:1; 1:3 and 1:1 dioxane/DMF. Casting was by hand using a doctor blade with a 10 mil ($25.4 \times 10^{-5}$m) gap. An evaporation time of 8—10 seconds and a water gel bath were used. Membrane thicknesses were:

| | |
|---|---|
| 0:1 | 4.0 mils ± 0.3 ($10.16 \times 10^{-5}$m ± $0.762 \times 10^{-5}$m) |
| 1:3 | 3.1 mils ± 0.2 ($7.87 \times 10^{-5}$m ± $0.508 \times 10^{-5}$m) |
| 1:1 | 3.1 mils ± 0.2 ($7.87 \times 10^{-5}$m ± $0.508 \times 10^{-5}$m) |

The membranes were evaluated for ketone/oil separation capability on a solution of 30% 150N oil in 1:1 MEK/MIBK. Test conditions were: Pressure — 400 psi (2758 kPa); Temp — ambient. Membrane performance is as below:

| Membrane | Flux ($1/m^2$-d) | Oil Rejection % |
|---|---|---|
| 0:1 | 2090 ± 370 | 13.0 ± 4 |
| 1:3 | 2279 ± 150 | 33.6 ± 1 |
| 1:1 | 1120 ± 150 | 60.8 ± 7 |

The membranes were seen to undergo plastic deformation under the test conditions. The polymer membrane also plasticized in MEK at room temperature. The membrane is not suitable for ketone/oil separation.

In this patent specification,
inches = 2.54 cm
mil = $10^{-3}$ inch = $2.54 \times 10^{-5}$m
foot = 30.48 cm
square foot = 929 $cm^2$
psi = 6.895 kPa
psig = 6.895 kPa gauge pressure
inch Hg = 3.377 kPa
gallon (U.S.) = 3.785 litre
micron and $\mu = 1 \times 10^{-6}$m
USP stands for U.S. Patent
Re stands for U.S. Patent Re-issue
# stands for number

"Teflon" is a registered Trade Mark. The following are also Trademarks: "Simplex"; "Dacron"; "Vexar"; "Carbosil"; "Versamide".

The adhesive system described and claimed in copending USSN 494,409 (published as US—A—4,464,494) referred to *supra* is described and claimed in our European Patent Application No. 84303215.2 filed on or about the same date as the present application under the title "Adhesive System for the Production of Spiral Wound Membrane Elements for Use in Organic Fluid Mixture Separations" (inventors: William M. King and William W. Wight).

**Claims**

1. A process for separating hydrocarbons from a solution comprising hydrocarbons and a solvent by selective permeation through a membrane, characterized in that the solution is a solvent and oil stream separated from a wax-oil dewaxing solvent slurry and in that at least part of the separation of solvent and oil is achieved by reverse osmosis through a selective permeable asymmetric polyimide membrane under reverse osmosis conditions, the asymmetric membrane being made from an aromatic, fully imidized polyimide whereof the dense side is contacted by the solvent and oil stream.

2. The process of claim 1 wherein the solvent recovered as permeate by means of the asymmetric polyimide membrane is recycled to a waxy hydrocarbon oil dewaxing process from which the said solution is obtained.

3. The process of claim 1 or claim 2 wherein solvent is recovered from retentate by distillation or stripping and recycled to a (or to the said) waxy hydrocarbon oil dewaxing process from which the said solution is obtained.

4. The process of any one of claims 1 to 3 wherein the dewaxing solvent is selected from aliphatic ketones having from 3 to 6 carbons, aromatic hydrocarbons, halogenated low molecular weight hydrocarbons and mixtures thereof.

5. The process of any one of claims 1 to 4 wherein the dewaxing solvent is a mixture of methyl ethyl ketone and methyl isobutyl ketone.

6. The process of any one of claims 1 to 4 wherein the dewaxing solvent is a mixture of methyl ethyl ketone and toluene.

7. The process of any one of claims 1 to 6 wherein the waxy hydrocarbon oil is a waxy petroleum oil.

8. The process of any one of claims 1 to 7 wherein the waxy hydrocarbon oil is a waxy lubricating oil stock.

9. The process of any one of claims 1 to 8 wherein the permeable asymmetric polyimide membrane is in the form of a spiral wound element.

**Patentansprüche**

1. Verfahren zur Abtrennung von Kohlenwasserstoffen aus einer Kohlenwasserstoffe und ein Lösungsmittel enthaltenen Lösung durch selektive Permeation durch eine Membran, dadurch gekennzeichnet, daß die Lösung ein Lösungsmittel- und Ölstrom ist, der von einer Paraffin-Ölentparaffinierungslösungsmittel-Aufschlämmung abgetrennt worden ist, und daß mindestens ein Teil der Abtrennung von Lösungsmittel und Öl durch Umkehrosmose durch eine selektive permeable asymmetrische Polyimidmembran unter Umkehromosebedingungen erfolgt ist, wobei die asymmetrische Membran aus einem aromatischen, vollständig imidisiertem Polyimid hergestellt ist und deren dichte Seite mit dem Lösungsmittel- und Ölstrom kontaktiert wird.

2. Verfahren nach Anspruch 1, dadurch gekennzeichnet, daß das als Permeat mit Hilfe der asymmetrischen Polyimidmembran gewonnene Lösungsmittel in einem Entparaffinierungsprozeß für paraffinhaltiges Kohlenwasserstofföl zurückgeführt wird, aus dem die Lösung erhalten worden ist.

3. Verfahren nach Anspruch 1 oder 2, dadurch gekennzeichnet, daß Lösungsmittel aus dem Retentat durch Destillation oder Strippen gewonnen und in einen (oder den) Entparaffinierungsprozeß für paraffinhaltiges Kohlenwasserstofföl zurückgeführt wird, aus dem die Lösung erhalten worden ist.

4. Verfahren nach einem der Ansprüche 1 bis 3, dadurch gekennzeichnet, daß das Entparaffinierungslösungsmittel ausgewählt ist aus aliphatischen Ketonen mit 3 bis 6 Kohlenstoffatomen, aromatischen Kohlenwasserstoffen, halogenierten Kohlenwasserstoffen mit niedrigem Molekulargewicht und Mischungen derselben.

5. Verfahren nach einem der Ansprüche 1 bis 4, dadurch gekennzeichnet, daß das Entparaffinierungslösungsmittel eine Mischung aus Methylethylketon und Methylisobutylketon ist.

6. Verfahren nach einem der Ansprüche 1 bis 4, dadurch gekennzeichnet, daß das Entparaffinierungslösungsmittel eine Mischung aus Methylethylketon und Toluol ist.

7. Verfahren nach einem der Ansprüche 1 bis 6, dadurch gekennzeichnet, daß das paraffinhaltige Kohlenwasserstofföl ein paraffinhaltiges Erdöl ist.

8. Verfahren nach einem der Ansprüche 1 bis 7, dadurch gekennzeichnet, daß das paraffinhaltige Kohlenwasserstofföl ein paraffinhaltiges Schmieröl ist.

9. Verfahren nach einem der Ansprüche 1 bis 8, dadurch gekennzeichnet, daß die permeable asymmetrische Polyimidmembran die Form eines spiralförmig gewundenen Elements besitzt.

**Revendications**

1. Procédé pour séparer des hydrocarbures d'une solution comprenant des hydrocarbures et un solvant, par perméation sélective à travers une membrane, caractérisé en ce que la solution est un courant de solvant et d'huile, séparé d'une suspension de solvant de déparaffinage et d'huile paraffineuse, et en ce qu'au moins un partie de la séparation du solvant et de l'huile est réalisée par osmose inverse à travers une membrane de polyimide asymétrique, perméable et sélective, dans les conditions d'une osmose inverse, la membrane asymétrique étant réalisée en un polyimide aromatique, entièrement imidé, dont le côté dense entre en contact avec le courant de solvant et d'huile.

2. Procédé selon la revendication 1, dans lequel le solvant récupéré sous forme de perméat au moyen de la membrane polyimide asymétrique est recyclé vers un procédé de déparaffinage d'huiles hydrocarbonées paraffineuses, à partir duquel on obtient ladite solution.

3. Procédé selon la revendication 1 ou la revendication 2, dans lequel le solvant est récupéré du rétentat par distillation ou entrainement et recyclé vers un (ou vers ledit) procédé de déparaffinage d'huile hydrocarbonée paraffineuse, à partir duquel on obtient ladite solution.

4. Procédé selon l'une quelconque des revendications 1 à 3, dans lequel le solvant de déparaffinage est choisi parmi les cétones aliphatiques ayant de 3 à 6 atomes de carbone, les hydrocarbures aromatiques, les hydrocarbures halogénés à faible masse moléculaire, et leurs mélanges.

5. Procédé selon l'une quelconque des revendications 1 à 4, dans lequel le solvant de déparaffinage est un mélange de méthyléthylcétone et de méthylisobutylcétone.

6. Procédé selon l'une quelconque des revendications 1 à 4, dans lequel le solvant de déparaffinage est un mélange de méthyléthylcétone et de toluène.

7. Procédé selon l'une quelconque des revendications 1 à 6, dans lequel l'huile hydrocarbonée paraffineuse est une huile de pétrole paraffineuse.

8. Procédé selon l'une quelconque des revendications 1 à 7, dans lequel l'huile hydrocarbonée paraffineuse est une huile de base lubrifiante paraffineuse.

9. Procédé selon l'une quelconque des revendications 1 à 8, dans lequel la membrane polyimide asymétrique perméable se présente sous la forme d'un élément enroulé en spirale.

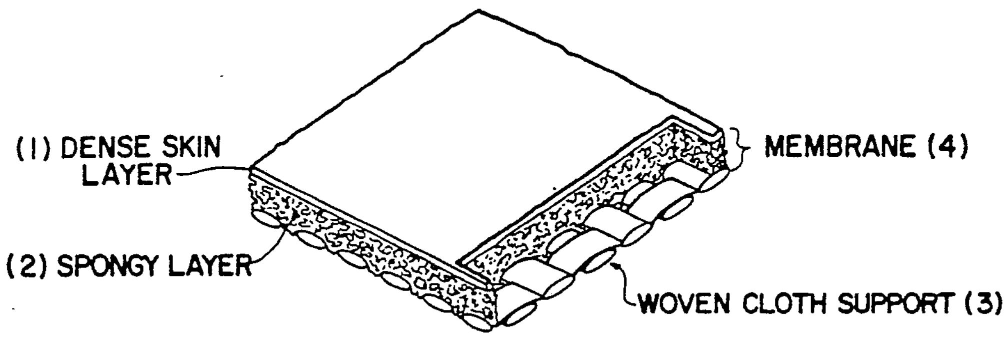


Cross-Section of Asymmetric Polyimide Membrane with integral support fabric.

FIG. 1

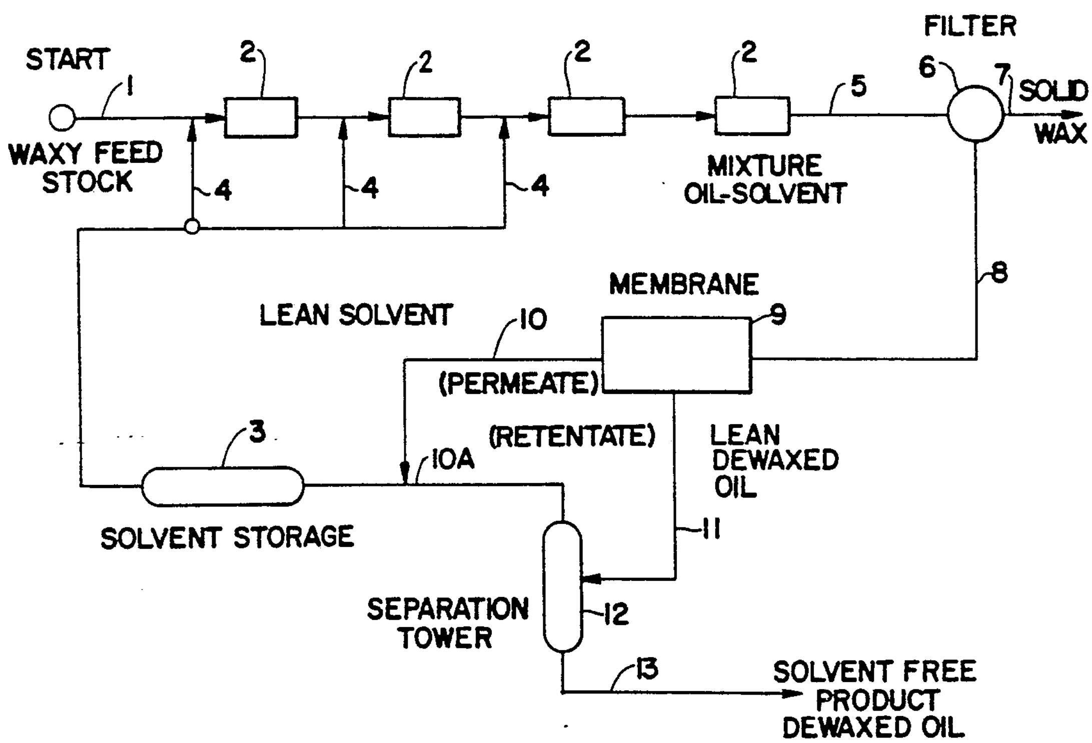


FIG. 2